# FASCICULE DE BREVET EUROPEEN

(11) **EP 3 383 645 B1**
(45) Date de publication et mention de la délivrance du brevet: **23.09.2020**
(21) Numéro de dépôt: 16813089.6
(22) Date de dépôt: 28.11.2016
(51) Int. Cl.: B32B 17/10

(54) **VITRAGE FEUILLETE A BASE D'ADHESIF SENSIBLE A LA PRESSION**
VERBUNDVERGLASUNG AUF BASIS VON HAFTKLEBER
LAMINATED GLAZING BASED ON PRESSURE-SENSITIVE ADHESIVE

(30) Priorité: 30.11.2015 FR 1561564
(43) Date de publication de la demande: 10.10.2018
(73) Titulaire: SAINT-GOBAIN GLASS FRANCE, 92400 Courbevoie (FR)
(72) Inventeur: SOON, Jia-Mei, 94240 L'Hay les Roses (FR)
(74) Mandataire: Saint-Gobain Recherche
(86) Numéro de dépôt international: PCT/FR2016/053109
(87) Numéro de publication internationale: WO 2017/093642

(56) Documents cités:
- EP-B1- 2 013 013
- WO-A1-2014/191234
- US-A1- 2005 106 372
- US-A1- 2011 293 857

## Description

L'invention concerne un vitrage feuilleté comprenant un empilement de couches minces dont (i) au moins deux substrats verriers assemblés l'un à l'autre par (ii) au moins un intercalaire de nature organique et (iii) au moins une couche fonctionnelle thermosensible associée à la face interne de l'un desdits substrats verriers par (iv) une couche d'adhésif sensible à la pression. Avantageusement, ce vitrage est électriquement commutable.

L'invention est également relative à l'utilisation d'un tel vitrage pour fabriquer un vitrage destiné à équiper un véhicule, en particulier choisi parmi une automobile, un bus, un camion, un bateau, un aéronef tel qu'un avion ou un hélicoptère, et un train.

Les deux substrats verriers dudit vitrage sont éventuellement maintenus ensemble par une structure de châssis. Le vitrage feuilleté de l'invention peut ainsi être un vitrage de véhicule choisi parmi un pare-brise, un vitrage latéral avant, un vitrage latéral arrière, une lunette arrière et un vitrage de toit. Avantageusement, il s'agit d'un vitrage de toit.
Les intercalaires se présentent sous la forme de films. Ce sont généralement des films en polyvinyle-butyral, abrégé PVB ou en éthyle-vinyle-acétate, abrégé EVA. Le PVB a l'avantage de présenter une bonne adhérence au verre et un taux d'allongement important avant déchirure.
Le vitrage feuilleté comprenant un tel intercalaire plastique s'avère ainsi résistant à l'impact. Lors d'un choc avec un corps étranger, le verre se fendille et la fracture reste localisée au point d'impact sans altérer la visibilité à travers le vitrage. En outre, l'intercalaire PVB maintient les morceaux de verre en place, ce qui diminue le risque de coupure par éclats de verre et permet la conservation de l'étanchéité du vitrage. Enfin, l'énergie résiduelle du corps est absorbée par cet intercalaire. Le vitrage empêche donc le passage du corps si l'impact n'est pas disproportionné.

Les principales étapes du processus de fabrication d'un vitrage feuilleté sont les suivantes :
- Lavage du verre : Le substrat verrier est préalablement découpé et éventuellement façonné. Afin d'éliminer toute trace de contamination, le verre est lavé à l'eau ionisée et séché soigneusement.
- Assemblage : Il est effectué dans une enceinte fermée, hors poussière à une température de 18-20°C et avec une humidité relative de l'atmosphère de 30%. Les couches de verre et d'intercalaire sont superposées en fonction de la composition désirée. L'ébarbage du volume feuilleté est effectué avant l'entrée dans le four de préchauffage.
- Dégazage : C'est l'opération la plus critique. Il s'agit d'éliminer l'air emprisonné, sous forme de bulles d'air éventuelles, entre l'intercalaire et la feuille de verre et de seller les bords de l'assemblage de manière à éviter tout risque de pénétration d'air au cours de l'opération finale d'autoclavage. Cette opération se fait par double calandrage avec un four de préchauffage à environ 60°C. Les conditions de températures sont fonction du type d'assemblage et de la vitesse de la ligne.
- Autoclavage : Le collage définitif du verre et de l'intercalaire est réalisé dans un autoclave à une forte pression et avec une montée en température pour assurer une forte liaison de l'assemblage.
   Ainsi, pour un intercalaire en PVB, on opère à une pression entre 10 et 12 bars, bornes incluses, et à une température de 120 à 145°C, bornes incluses. Ceci permet de fluer suffisamment le PVB pour épouser parfaitement la surface du verre et créer l'adhésion.
   Pour un intercalaire en EVA, on procède au collage à une température légèrement en dessous de 100°C. Les temps de cycle sont fonction du remplissage et de la composition du vitrage feuilleté.
- Nettoyage : Un deuxième ébarbage périphérique est nécessaire pour éliminer l'intercalaire excédentaire, dû au fluage.

Cependant, dans le cas où l'on souhaite fabriquer un vitrage feuilleté comprenant des couches intermédiaires fonctionnelles, la température à laquelle le collage doit avoir lieu peut poser problème. Le collage du ou des films intercalaires du vitrage au cours de la phase de lamination doit se dérouler, bien souvent, à une température difficilement compatible avec la mise en œuvre d'autres couches, notamment de couches dites fonctionnelles, sensibles à la température. En effet, de nombreux revêtements fonctionnels voient leur fonction définitivement endommagée par l'exposition à de telles températures d'autoclavage.

Actuellement, pour fabriquer un tel vitrage feuilleté en une seule étape de lamination à chaud, sans causer de perte de fonctionnalité à la couche fonctionnelle, on utilise un intercalaire en EVA au lieu du PVB, l'EVA présentant une température de mise en œuvre ou température de collage pour réaliser la stratification bien inférieure à celle du PVB.

Cependant, la couche de PVB reste indispensable en raison de sa résistance aux chocs dans de nombreuses applications. Il est donc impossible de réaliser la fabrication de vitrage feuilleté présentant un revêtement fonctionnel thermosensible avec une seule étape de lamination à haute température.

D'où, un processus de stratification à deux temps mis au point par Saint-Gobain. Dans ce procédé faisant partie de l'art antérieur, (i) une couche de PVB est, au cours d'une première étape de lamination à chaud, appliquée à une température pouvant atteindre 120°C sur une feuille de verre destinée à former le côté du vitrage en contact avec l'espace extérieur du véhicule, puis l'ensemble peut être associé, par exemple à d'autres feuilles, telle qu'une feuille de métal, qui offrent des fonctionnalités complémentaires, enfin (ii) un film actif, par exemple un film pour dispositif à particules en suspension, abrégé SPD, est rajouté dans une seconde étape de lamination à chaud à une température inférieure à 100°C, ledit film étant solidarisé par de l'EVA à la couche de verre destiné à former le côté du vitrage en contact avec l'espace intérieur du véhicule et au stratifié comprenant le PVB de l'étape précédente. De cette façon, le film de SPD n'est jamais exposé à la haute température de stratification exigée pour la mise en œuvre du PVB.

Seul un procédé comptant au moins deux étapes de lamination à chaud est donc actuellement possible pour la stratification d'un vitrage feuilleté comprenant au moins une couche de PVB et de SPD. Mais ce procédé nécessite plusieurs manipulations, ne peut pas être réalisé en continu et est donc consommateur de temps et d'énergie.

D'autre part, le document EP 2 013 013 B1 décrit un vitrage feuilleté comprenant une première feuille de verre, au moins une feuille intercalaire thermoplastique, au moins une feuille de copolymère d'éthylène et d'acide méthacrylique, en contact direct avec une feuille fonctionnelle thermosensible, et une deuxième feuille de verre. Cependant, un copolymère d'éthylène et d'acide méthacrylique n'est en général pas un adhésif sensible à la pression, et ce document décrit la mise en œuvre d'un cycle de feuilletage dans un four à 105°C, et l'utilisation d'EVA.

Le document WO 2014/191234 A1 décrit un vitrage feuilleté comprenant comprenant deux feuilles de verre, une feuille intercalaire en PVB et un film électrophorétique placé sur la face intérieure d'une des feuilles de verre par l'intermédiaire d'une feuille d'adhésif sensible à la pression. Le but de l'invention est de parvenir à remédier aux inconvénients de l'art antérieur, en mettant au point un nouveau type d'empilement de vitrage feuilleté, dont les couches adhèrent efficacement les unes aux autres tout en conciliant une thermo-sensibilisation et une résistance aux chocs.

Un autre but important de l'invention est de proposer un procédé de fabrication d'un tel empilement et par extension d'un vitrage feuilleté comprenant un tel empilement qui soit économiquement avantageux.

La demanderesse a mis au point un vitrage feuilleté, résistant aux chocs et présentant au moins un film actif thermosensible qui est maintenant réalisable en une seule étape de lamination à chaud mettant en œuvre au moins un intercalaire polymérique.

L'invention a ainsi pour objet, un vitrage feuilleté tel que défini dans la revendication 1.

Les deux faces d'un même vitrage sont, chacune, en contact avec un milieu externe. Ces milieux externes se répartissent chacun de part et d'autre dudit vitrage.

Dans le sens de l'invention, la face « externe » d'une couche ou d'une feuille signifie la face de ladite couche ou de ladite feuille du vitrage la plus proche du milieu externe le plus proche.

Dans le sens de l'invention, la face « interne » d'une couche ou d'une feuille signifie la face de ladite couche ou de ladite feuille du vitrage la plus éloignée du milieu externe le plus proche.

Dans le sens de l'invention, on utilisera indifféremment les termes de « feuille », « film » ou « couche » dans la présente invention pour définir les différentes strates de la structure du vitrage feuilleté selon l'invention. Ces termes ont ici la même signification.

Avantageusement, la première feuille de verre 1 dudit vitrage est en contact direct avec le milieu externe de ce dernier qui est le milieu externe au véhicule doté d'un tel vitrage feuilleté objet de l'invention. Respectivement, la seconde feuille de verre 2 dudit vitrage est en contact direct avec le milieu externe de ce dernier qui s'avère être le milieu interne au véhicule, c'est-à-dire le milieu où se trouvent le conducteur et les éventuels passagers.

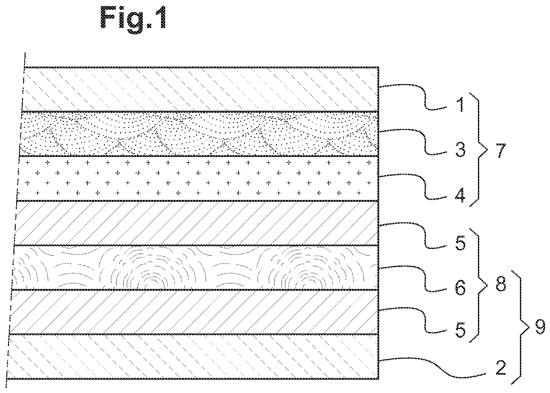

Selon un premier mode de réalisation de l'invention représenté sur la figure 1, le vitrage feuilleté selon l'invention comprend successivement:
- une première feuille de verre 1,
- une feuille intercalaire 3 en polymère thermoplastique,
- éventuellement une feuille « anti solaire » 4 ou couche métallique fonctionnelle à propriétés de réflexion dans l'infrarouge et/ou dans le rayonnement solaire,
- une première feuille d'adhésif sensible à la pression 5,
- une feuille fonctionnelle thermosensible 6,
- une seconde feuille d'adhésif sensible à la pression 5,
- une deuxième feuille de verre 2.

Selon l'invention, le polymère thermoplastique de la feuille intercalaire 3 est avantageusement choisi parmi le polyvinylbutyral, le polyuréthane, l'éthylène acétate de vinyle et les ionomères.

Selon l'invention, le polymère thermoplastique de la feuille intercalaire 3 est avantageusement le PVB.

Selon l'invention, l'adhésif sensible à la pression est avantageusement choisi parmi les adhésifs sensibles à la pression à base d'acrylates et les adhésifs sensibles à la pression à base de silicone.

Selon l'invention, la feuille fonctionnelle thermosensible (6) est à base de cristaux liquides encapsulés, ou dispersés dans une matrice polymère (PDLC), de particules électrophorétiques dispersées dans un milieu, de particules dispersées dans un fluide électrophorétique ou comprenant un film de dispositif de particules en suspension (SPD) ou un stratifié d'un tel film, ou un système électrochrome.

Selon l'invention, la feuille « anti solaire » est avantageusement en argent ou tout autres métal ayant des propriétés de réflexion de la lumière ou un métal ou composé métallique ayant des propriétés d'absorption de la lumière. Selon l'invention, le vitrage feuilleté est plat ou bombé.

En outre, il s'agit avantageusement d'un vitrage de véhicule choisi parmi un pare-brise, un vitrage latéral avant, un vitrage latéral arrière, une lunette arrière et un vitrage de toit.

Il s'agit avantageusement d'un vitrage de véhicule choisi parmi une automobile, un train, un camion, un avion et un bus.

L'invention a également pour objet, un procédé de fabrication d'un vitrage feuilleté tel que défini précédemment, dans lequel les étapes de mise en place des différentes feuilles ont lieu en partant (i) de la mise en place de la feuille intercalaire 3 en polymère thermoplastique sur la face interne de la première feuille de verre 1, ou en partant (ii) de la mise en place de la seconde feuille d'adhésif sensible à la pression 5 sur la face interne de la seconde feuille de verre 2 ou en partant (iii) de la mise en place d'une feuille d'adhésif sensible à la pression 5 sur l'une au moins des deux faces d'une feuille fonctionnelle thermosensible 6.

Le procédé de fabrication d'un vitrage feuilleté selon l'invention, comprend :
- au moins une étape de mise en place d'une feuille intercalaire 3 en polymère thermoplastique sur la face interne d'une première feuille de verre 1, éventuellement préalablement bombée, et éventuellement la mise en place d'une feuille « anti solaire » 4 sur la face restée vacante de ladite feuille intercalaire 3 qui est ainsi prise en sandwich entre ladite première feuille de verre 1 et ladite éventuelle feuille « anti solaire » 4 de manière à former un premier feuilleté partiel 7, et/ou
- au moins une étape de mise en place d'une première et/ou d'une seconde feuille d'adhésif sensible à la pression 5 sur l'une au moins des deux faces d'une feuille fonctionnelle thermosensible 6.

Les modes de réalisations décrits ci-dessous permettent, en particulier, d'obtenir les empilements, selon l'invention tels que représentés sur la figure 1.

Selon l'invention, la première feuille d'adhésif sensible à la pression 5 est disposée sur la première face de la feuille fonctionnelle thermosensible 6 et la seconde feuille d'adhésif sensible à la pression 5 est disposée sur la seconde face de ladite feuille fonctionnelle thermosensible 6, restée vacante, de manière à obtenir un second feuilleté partiel 8.

Selon un premier mode de réalisation du procédé selon l'invention, le second feuilleté partiel 8 est appliqué par l'intermédiaire de l'une de ses faces adhésives sensibles à la pression 5 sur ou sous le premier feuilleté partiel 7, soit directement sur la face vacante de la feuille de polymère thermoplastique 3 de ce dernier, soit éventuellement sur la face vacante de la feuille « anti solaire » 4, lorsque celle-ci est présente, de ce premier feuilleté partiel 7 et la deuxième feuille de verre 2, éventuellement préalablement bombée, est appliquée au niveau de sa face interne sur ou sous la face du feuilleté résultant, opposée à la face restée vacante de la première feuille de verre 1.

Selon un second mode de réalisation du procédé selon l'invention, la deuxième feuille de verre 2, éventuellement préalablement bombée, est appliquée au niveau de sa face interne sur ou sous l'une des faces dudit second feuilleté partiel 8, de manière à former un troisième feuilleté partiel 9.

Ledit troisième feuilleté partiel 9 peut ensuite être mis en place par l'intermédiaire de sa face adhésive sensible à la pression 5 sur ou sous le premier feuilleté partiel 7, soit directement sur la face vacante de sa feuille de polymère thermoplastique 3, soit éventuellement sur la face vacante de sa feuille « anti solaire » 4, lorsque cette dernière est présente.

Selon l'invention, le procédé de fabrication du vitrage feuilleté peut comprendre, en outre, au moins :
- une étape de dégazage sous vide du feuilleté résultant, avec utilisation d'un joint périphérique ou d'un sac à vide,
- éventuellement une étape de scellage à chaud des bords dudit feuilleté, et
- une étape d'autoclavage.

Le procédé peut comprendre, en outre, au moins une étape de calandrage, éventuellement à chaud.

L'invention est également relative à l'utilisation d'un vitrage tel que défini précédemment pour fabriquer un vitrage de véhicule choisi parmi un pare-brise, un vitrage latéral avant, un vitrage latéral arrière, une lunette arrière et un vitrage de toit et/ou pour fabriquer un vitrage de véhicule choisi parmi une automobile, un train, un camion, un aéronef et un bus.

Le substrat verre du vitrage feuilleté selon l'invention peut être du type vendu sous la dénomination commerciale Planiclear® ou Planitherm® par la société Saint-Gobain voir même VG10. Son épaisseur sera choisie en fonction de l'utilisation envisagée.

Le vitrage feuilleté selon l'invention comprend au moins deux feuilles d'adhésif sensible à la pression.

Un adhésif sensible à la pression, abrégé PSA et communément appelé autoadhésif, est un adhésif qui forme une liaison lorsqu'une pression lui est appliquée de manière à solidariser l'adhésif avec la surface à coller. Aucun solvant, ni d'eau, ou de chaleur n'est nécessaire pour activer l'adhésif. Il est utilisé dans des garnitures d'automobile, et dans une grande une grande variété d'autres produits.

Comme son nom l'indique "sensible à la pression", le degré de liaison entre une surface donnée et le liant autoadhésif est influencée par la quantité de pression utilisée pour appliquer l'adhésif sur la surface cible. D'autres facteurs interviennent également et sont importants pour une bonne adhérence telle que la douceur, l'énergie de surface, et l'élimination des contaminants.

Les PSA sont généralement conçus pour former une liaison et maintenir celle-ci à la température ambiante. L'homme de l'art veillera à choisir une formulation d'adhésif autoadhésif adaptée aux conditions de son utilisation. En effet, les PSA généralement voient leur adhérence se réduire ou disparaitre à basse température et voient leur capacité à tenir le cisaillement se réduire à températures élevées.

Les PSA sont généralement à base d'élastomère couplé avec un agent adhésif supplémentaire approprié ou agent « tackifiant » (par exemple, une résine ester).

Les élastomères peuvent être à base:
1/ d'acrylates, qui peuvent être suffisamment collant pour ne pas exiger un agent tackifiant supplémentaire.
2/ de Nitriles
3/ de silicone, requérant des agents tackifiants spéciaux telles que des résines de silicate de type « MQ », composées de triméthyle silane monofonctionnel ("M") qui a réagi avec tétrachlorure de silicium quadrifonctionnel ("Q"). Les PSA à base de silicone sont par exemple des gommes et résines de polydiméthylsiloxane dispersées dans du xylène ou un malnge de xylène et toulène.
4/ des copolymères blocs à base de styrène tel que des copolymères blocs Styrène butadiène -styrène (SBS), Styrène-éthylène / butylène -styrène (SEBS), styrène-éthylène / propylène (SEP), Styrène isoprène -styrène (SIS),
5/ Les éthers vinyliques.

Avantageusement, l'adhésif sensible à la pression conforme à l'invention est choisi parmi les PSA à base d'acrylates et les PSA à base de silicone.

Ces adhésifs sont commercialisés sous forme de rouleaux d'adhésif double face.

On peut citer comme PSA à base de silicone les adhésifs de Dow Corning® tel que le 2013 Adhesive, 7657 Adhesive, Q2-7735 Adhesive, Q2-7406 Adhesive, Q2-7566 Adhesive, 7355 Adhesive, 7358 Adhesive, 280A Adhesive, 282 Adhesive, 7651 Adhesive, 7652 Adhesive, 7356 Adhesive.

Le vitrage feuilleté comprend, en outre, également une feuille fonctionnelle thermosensible.
Il peut s'agir d'un film de dispositif de particules en suspension (SPD) ou d'un stratifié d'un tel film, dans lequel le film comprend des substrats revêtus, sur au moins une partie de leur surface interne, (i) par un polymère conducteur tel que, par exemple, le polythiophène ou (ii) par une couche conductrice inorganique tel que par exemple l'oxyde d'étain et d'indium, pour servir de moyen d'électrode. Le polymère peut être appliqué sous la forme d'une composition aqueuse comprenant, en plus du polymère, au moins un solvant et au moins un liant. Un polymère conducteur à base de polythiophène préféré est un polymère de polyéthylène dioxythiophène (PEDT). Le polymère peut être dopé par du polystyrène sulfonate. Les électrodes polymères peuvent être connectées à une matière conductrice qui s'étend au-delà d'une limite externe du film pour connecter le film à une source de tension appropriée.

On peut aussi citer les films qui comprennent une matrice polymère et présentent des gouttelettes d'une suspension de modulateur de lumière liquide contenant une pluralité de particules dispersées dans un milieu liquide en suspension distribué au sein de la matrice. Ledit milieu en suspension (a) est pratiquement immiscible avec la matrice polymère, (b) possède à la pression atmosphérique un point d'ébullition supérieur à environ 100 °C, (c) une résistivité électrique d'au moins environ 0,8 x 10⁶ ohms par carré, et (d) un indice de réfraction à 25 ° C qui diffère de pas plus d'environ 0,002 de celui de la matrice polymère, mesuré à pratiquement la même température. Le milieu de suspension renferme au moins un composé liquide sélectionné parmi le groupe englobant méthyl pyrrolidinone, éthyl pyrrolidinone, diméthyl malonate, diéthyl malonate, diméthyl succinate, di(propylène glycol)méthyl éther, diméthyl phtalate, butyl phtalyl butyl glycolate, éthyl lactate, propylène carbonate, diméthyl perfluorosubérate, diméthyl tétrafluorosucciate, tétra (éthylène glycol)diméthyl éther, tri(éthylène glycol)diméthyl éther, di(éthylène glycol)diméthyl éther, éthylène glycol phényl éther, de l'huile de lin époxydé, de l'huile de soja époxydé, diéthylisophtalate, un ester de laurate à base de copolyol de silicone, un copolymère de copolyol de silicone, un ester de copolyol de silicone, un ester d'isostéarate à base de copolyol de silicone, un ester de pélergonate à base de copolyol de silicone, diéthylisophtalate, diméthyl octofluoroadipate, ainsi que des mélanges correspondants et, facultativement, au moins un milieu de suspension liquide antérieurement connu. La matrice polymère peut facultativement être réticulée pour former le film afin de produire une matrice polymère réticulée.

Un tel film à dispositif à particules en suspension est approprié pour être utilisé comme modulateur de lumière d'un vitrage feuilleté selon l'invention.

Il peut aussi s'agir éventuellement d'un film contenant des particules encapsulées dispersées dans un fluide de suspension, ou électrophorétique. Ledit fluide peut être un mélange de deux ou de plus de deux fluides, ou bien un fluide unique. Par ailleurs, ces particules peuvent contenir, elles-mêmes, un liquide et être dispersées dans un fluide de suspension. En tout état de cause, le fluide de suspension peut avoir une densité ou un indice de réfraction dont les valeurs sont sensiblement adaptées à celles qui caractérisent les particules dispersées dans le fluide. Il peut s'agir, en particulier, de particules polymères colorées, dotées de préférence d'une fonctionnalité de surface de rétention des charges. Dans les milieux électrophorétiques, il est avantageux d'utiliser des particules pigmentaires comportant des écorces polymères comprenant de 0,1 à 5 pour cent en moles de motifs répétitifs issus d'un monomère acrylate fluoré ou d'un monomère méthacrylate fluoré. Le polymère a de façon spécifique une structure à chaîne ramifiée, avec des chaînes latérales qui s'étendent à partir d'une chaîne principale.

Le fluide conducteur peut être coloré. Il peut comprendre un solvant polaire et un colorant choisi parmi un pigment et/ou une teinture. Le fluide conducteur coloré ne devrait pas provoquer de rupture électrique d'un diélectrique dans le dispositif dans lequel il est employé. Un agent pour la commande de conductivité électrique peut facultativement être ajouté au fluide conducteur coloré.

L'application de champs électriques dans un vitrage, muni d'un tel film, par électrophorèse permet d'agir sur les propriétés optiques dudit vitrage.

En outre, il peut s'agir d'un vitrage disposant d'un système électrochrome comprenant des couches électroconductrices, séparées par une couche d'un matériau électrochrome, un électrolyte et une contre électrode, les-dites couches électroconductrices étant munies chacune d'une bande électroconductrice réalisée dans un matériau dont la conductivité électrique est grande par rapport à celle des couches électroconductrices, les bandes électroconductrices étant disposées le long de bords opposés du vitrage et reliées à un générateur de tension qui applique en phase de coloration (ou respectivement en phase de décoloration), entre deux points A et B appartenant respectivement aux couches électroconductrices et à proximité immédiate des bandes électro-conductrices une différence de potentiel. Avantageusement, les bandes électroconductrices sont en cuivre, soudées sur l'électrode conductrice telle que définie précédemment, la couche d'un matériau électrochrome est constituée d'un matériau électrochrome cathodique tel que, par exemple, le trioxyde de tungstène, la contre-électrode est constituée d'un matériau électrochrome-anodique tel que, par exemple, l'oxyde d'iridium et/ou l'électrolyte est un électrolyte à conduction protonique tel que par exemple un complexe polymérique de polyoxyde d'éthylène et d'acide orthophosphorique anhydre ou un électrolyte à conduction ionique au lithium ou protonique (H⁺).

On peut ainsi citer, par exemple, les viologènes et les polymères conducteurs, telle que la polyaniline ou PAni.

Enfin, on peut également citer les films fonctionnels à base de cristaux liquides dispersés dans une matrice polymère connu sous le sigle abrégé PDLCs. Les cristaux liquides dispersés dans une matrice polymère sont une classe de matériaux hétérogènes constitués d'une dispersion de microgouttelettes de cristal liquide dans une matrice de polymère solide et plus ou moins flexible. Ces matériaux présentent des propriétés électrooptiques. Ils peuvent en effet commuter entre un état opaque fortement diffusif (état OFF) et un état transparent (état ON) après application d'un champ électrique.

Le système PDLC est mis en œuvre dans les fenêtres commutables. Il comporte plusieurs avantages tels la facilité de fabrication, la facilité d'utilisation à grande échelle, la stabilité, la vitesse de leur temps de réponse et le fait de ne pas nécessiter l'emploi de polariseurs qui absorbent près de la moitié de la lumière incidente.

Différentes mésophases peuvent être utilisées pour élaborer ces matériaux : la phase nématique, la phase cholestérique ainsi que les phases smectiques A et C*.

Le principe des systèmes électro-optiques utilisant un PDLC consiste en un composite placé en sandwich entre deux électrodes constituées de lames de verre dont une face est recouverte d'une couche conductrice et transparente d'oxyde d'indium et d'étain (ITO). En l'absence de champ électrique, l'orientation moyenne des directeurs moléculaires de cristal liquide dans le Cristal liquide est aléatoire. La différence d'indice de réfraction entre le cristal liquide ségrégué et la matrice macromoléculaire conduit à un matériau d'aspect laiteux et opaque et qui va diffuser la lumière (état OFF).

Lors de l'application d'un champ électrique entre les électrodes de la cellule, les directeurs moléculaires s'orientent dans la direction du champ. Un faisceau d'indice normal traverse les gouttelettes avec un indice de réfraction égal à n0, indice ordinaire des molécules de cristal liquide. Si cet indice est proche de celui de la matrice polymère, le film apparaît clair et transparent (état ON).

Comparé aux vitrages feuilletés standard, le vitrage électriquement commutable fournit des fonctions supplémentaires particulières qui se traduisent en terme de confort d'utilisateur, de transmission de la lumière et d'économies d'énergie. Le vitrage commutable peut rarement être installé directement comme un produit fini. Typiquement, avant la mise en œuvre du vitrage commutable, une pré-stratification est nécessaire. Par exemple, pour la mise en œuvre d'un film de SPD au niveau du cadre du toit ouvrant d'un véhicule automobile, il faut réaliser un stratifié entre au moins 2 feuilles de verre clair ou teinté avec du PVB. Ceci afin de remplir les normes de sécurité en cas de la rupture de verre et prolonger la durée de vie du film de SPD.

Le vitrage feuilleté selon l'invention comprend, en outre, au moins une feuille intercalaire polymérique. L'intercalaire est en polymère organique. Ce polymère peut notamment être en polyvinylbutyral abrégé PVB, en éthylène vinylacétate abrégé EVA, en polyuréthane ou à base de ionomères.
On peut citer comme exemples de ionomères les produits Sentryglass® commercialisés par la société Dupont®. Avantageusement, il s'agit du PVB.

Le vitrage feuilleté selon l'invention peut comprendre, enfin, optionnellement une feuille « anti solaire » dite également feuille de contrôle solaire.

Un type d'empilement de couches connu pour conférer aux substrats des propriétés « anti solaire » comprend (i) au moins une couche métallique fonctionnelle à propriétés de réflexion dans l'infrarouge et/ou dans le rayonnement solaire, notamment une couche fonctionnelle métallique à base d'argent ou d'alliage métallique contenant de l'argent et/ou une couche fonctionnelle à propriétés d'absorption dans le rayonnement solaire et/ou dans l'infra-rouge.

Le rayonnement solaire se compose d'ultraviolets et de la lumière visible. Dans ce type d'empilement, la couche fonctionnelle se trouve ainsi disposée entre deux revêtements diélectriques comportant chacun au moins une couche diélectrique qui sont chacune en un matériau diélectrique du type nitrure ou oxyde. On peut citer, par exemple, les nitrures et les oxydes de silicium, d'aluminium, de Nb, de Ti, de InSn et de SnZn.
De préférence, on peut citer le nitrure de silicium, l'oxyde de niobium et l'oxyde de titane.

On peut citer, comme exemples de film à contrôle solaire, les produits réflecteurs Solargard® de Saint-Gobain tel que le LX70 et les produits absorbeurs Ceramic Series de Huper Optik® tel que le Huper Optik® C5.Du point de vu optique, le but de ces revêtements qui encadrent la couche fonctionnelle métallique est « d'antirefléter » cette couche fonctionnelle métallique.

Par « revêtement » au sens de la présente invention, il faut comprendre qu'il peut y avoir une seule couche ou plusieurs couches de matériaux différents à l'intérieur du revêtement.

Pour rappel, le facteur solaire d'un vitrage est le rapport de l'énergie solaire totale entrant dans le local à travers ce vitrage sur l'énergie solaire incidente totale et la sélectivité S correspond au rapport de la transmission lumineuse T_{Lvis} dans le visible du vitrage sur le facteur solaire FS du vitrage et est telle que : S = T_{Lvis} / FS.

Ces vitrages peuvent par ailleurs être intégrés dans des vitrages présentant des fonctionnalités particulières, comme par exemple des vitrages chauffants.

Comme habituellement, par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5. Il est connu de l'homme du métier que n est l'indice de réfraction et k, une constante propre à un milieu donné caractérisant un matériau.

L'épaisseur physique de ladite couche métallique fonctionnelle est de préférence comprise entre 5 nm et 20 nm, en incluant ces valeurs, afin d'atteindre une émissivité < 2,5 %.

Dans une autre version particulière de l'invention, ledit revêtement diélectrique disposé ou situé entre la face du substrat et ladite couche fonctionnelle métallique comporte une couche à haut indice de réfraction en un matériau présentant un indice de réfraction compris entre 2,3 et 2,7, cette couche étant de préférence à base d'oxyde. Les valeurs d'indice de réfraction indiquées dans le présent document sont les valeurs mesurées comme habituellement à la longueur d'onde de 550 nm.

Cette couche haut indice présente, de préférence une épaisseur physique comprise entre 5 et 15 nm.

Cette couche haut indice permet de maximaliser la haute transmission lumineuse dans le visible de l'empilement et a une action favorable sur l'obtention de couleurs neutres, tant en transmission qu'en réflexion.

L'épaisseur physique de ladite couche diélectrique à base d'oxyde de Nb et/ou d'oxyde de Ti nitrure est, de préférence, comprise entre 10 et 60 nm.

Dans une autre version particulière de l'invention, la couche métallique fonctionnelle est déposée directement sur un revêtement de sous-blocage disposé entre la couche métallique fonctionnelle et le revêtement diélectrique sous-jacent à la couche fonctionnelle et/ou la couche fonctionnelle est déposée directement sous un revêtement de sur-blocage disposé entre la couche métallique fonctionnelle et le revêtement diélectrique sus-jacent à ladite couche métallique fonctionnelle et le revêtement de sous-blocage et/ou le revêtement de sur-blocage comprend une couche fine (i) à base de métal choisi parmi le nickel, le titane, le chrome, l'or, le cuivre et leurs alliages, et (ii) présentant une épaisseur physique e' telle que 0,2 nm ≤ e' ≤ 2,5 nm. On peut citer comme alliage le NiCr.

Dans une autre version particulière de l'invention, la dernière couche du revêtement diélectrique sus-jacent, celle la plus éloignée du substrat, est à base d'oxyde, déposée de préférence sous stoechiométrique, et notamment est à base d'oxyde de titane (TiOₓ) ou à base d'oxyde mixte de zinc et d'étain (SnZnOₓ).

Les substrats des vitrages selon l'invention sont aptes à subir un traitement thermique sans dommage pour l'empilement de couches minces. Ils sont donc éventuellement bombés et/ou trempés.

Les détails et caractéristiques avantageuses de l'invention ressortent des exemples 1 et 2 suivants qui sont non limitatifs. Les numéros des feuilletés se réfèrent à la figure 1.

### EXEMPLE 1 :

L'exemple 1 a été réalisé de la façon suivante.

### 1/ Préparation d'un feuilleté partiel 7

Un substrat transparent de type verre est assemblé à une feuille de PVB standard sur laquelle est appliqué un film de contrôle solaire de manière à obtenir un feuilleté partiel 7.Le film en PVB peut être clair ou teinté, tant qu'il répond aux exigences de sécurité requises pour l'utilisation destinée.

Le feuilleté partiel 7 précédemment réalisé est placé dans un sac étanche sauf au niveau d'un des côtés dudit sac. Le sac est ensuite placé dans une chambre à vide et un vide est créé dans ledit sac, pendant une durée d'environ 30 min, en fonction de la puissance de la machine. Le sac est scellé sous vide et est ensuite placé dans un autoclave avec un cycle de chauffage prescrit, à savoir 120°C sous 10 bars, afin de réaliser la lamination ou feuilletage visé(e). Si l'application envisagée ne nécessite pas l'utilisation d'un film de contrôle solaire, celui-ci peut être remplacé par un film fictif avec une faible énergie de surface, par exemple un film d'éthylène tétrafluoroethyléne (abrégé ETFE), qui peut être facilement décollé de la surface du PVB après lamination préalablement à l'association du feuilleté résultant avec une autre surface. On parle alors de «faux feuilletage».

### 2/ Préparation d'un feuilleté partiel 8

Un autre feuilleté partiel, à savoir un feuilleté partiel 8, est réalisé à l'aide de deux films de PSA pré-enduit. Chacun des films est disposé entre deux films de protection.
L'homme de l'art peut facilement réaliser un procédé R2R, où un film thermosensible est introduit simultanément entre deux films de PSA, formant un «sandwich» avec un film de PSA de chaque côté dudit film thermosensible. Pour cela, un des deux films de protection de chacun des films de PSA est enlevé et chaque face de PSA ainsi dégagée est respectivement appliquée sur l'une des deux faces du film thermosensible. Les trois films (les deux films de PSA et celui thermosensible) sont ensuite pressés ensemble dans une zone de pincement de pression à température ambiante.

### 3/ Préparation d'un feuilleté partiel 9

Un second substrat transparent de type verre est introduit dans une fente de pressage. En fonction de l'adhésif utilisé et de la chaleur, et selon l'utilisation finale requise, le feuilleté partiel 8 peut être appliqué sur le second substrat verre de manière à conformer ledit feuilleté partiel 8 à la courbure de la vitre. En tout état de cause, l'application d'une d'un des deux films de PSA, débarrassé de son film de protection, termine l'assemblage du feuilleté partiel 9 issu de l'assemblage du feuilleté partiel 8 avec la seconde feuille de verre.

### 4/ Assemblage du feuilleté partiel 9 avec le feuilleté partiel 7

L'assemblage final donnant lieu à la formation de l'ensemble du système feuilleté représenté à la figure 1 est réalisé en combinant les feuilletés partiels 9 et 7 ensembles. Cette association a lieu grâce à l'enlèvement du dernier film protecteur de la couche de PSA, encore vacante, du feuilleté partiel 9 et en mettant en contact le film de PSA du feuilleté partiel 9 avec le film de contrôle solaire du feuilleté partiel 7 et en pressant ensemble les feuilletés 9 et 7 l'un contre l'autre au niveau de cette zone de contact afin de faire adhérer le feuilleté partiel 9 au feuilleté partiel 7.

La nature et l'épaisseur des couches ainsi que les conditions de dépôt desdites couches de l'Exemple 1 ci-dessus et de l'Exemple 2 ci-dessous, sont indiquées dans le **Tableau 1** suivant:

**TABLEAU 1**

| Couche (N° selon Fig.1) | matériau employé | Pression de dépôt/ Température | Epaisseur* |
|---|---|---|---|
| Substrat verre (1,2) | Planiclear® ou planitherm® ou VG10 (verre teinté) | | 2 mm |
| intercalaire (3) | PVB standard, clair ou teinté | 10Mbar À 120°C | 0,76 mm |
| Couche de contrôle solaire (4) | X70 de Solargard® ou XIR70 de Southwall® ou HuperOptik C5 | | Structure muticouche mince d'épaisseur <250 nm déposée sur une couche de 25 ou 50µm de PET |
| Couche adhésive (5) | PSA Aeroset® d'Ashland | | Revêtement humide d'environ 2µm d'épaisseur |
| Couche fonctionnelle thermosensible (6) | SPD d'Hitachi® | | 0,5 mm |

| | | | |
|---|---|---|---|
| * épaisseurs géométriques ou physiques (et non pas les épaisseurs optiques) | | | |

### EXEMPLE 2 :

En variante, les feuilletés partiels 7 et 8, dont l'obtention et la préparation sont décrites ci-dessus, sont préassemblés dans un premier temps. Cette association a lieu grâce à l'enlèvement du dernier film protecteur de la couche de PSA, encore vacante, du feuilleté partiel 8 et en mettant en contact le film de PSA du feuilleté partiel 8 avec le film de contrôle solaire du feuilleté partiel 7 et en pressant ensemble les feuilletés 8 et 7 l'un contre l'autre au niveau de cette zone de contact afin de faire adhérer le feuilleté partiel 8 au feuilleté partiel 7.

Le feuilleté résultant, lui-même débarrassé du dernier film protecteur de sa couche de PSA, encore vacante, est appliqué sur un second substrat de verre. L'adhérence du second substrat de verre au feuilleté résultant de l'association des feuilletés partiels 7 et 8 est obtenue par simple pressage du tout.

La force de pression au cours des étapes de pressages des exemples 1 et 2 est adaptée par l'homme du métier en fonction des matériaux utilisés afin de ne pas endommager l'intégrité des couches ou films.

Avec l'invention il est possible de fabriquer un vitrage feuilleté comprenant au moins une couche de PVB et au moins une couche fonctionnelle thermosensible en une seule étape de lamination par autoclavage.

L'utilisation de couche de PSA simplifie la fabrication et diminue le coût par rapport à l'utilisation d'EVA.

En outre, la résistance mécanique de l'empilement selon l'invention est très bonne. Par ailleurs, la tenue chimique générale de cet empilement est globalement bonne.

## Revendications

1. Vitrage feuilleté comprenant :
• une première feuille de verre (1);
• au moins une feuille intercalaire (3) en polymère thermoplastique;
• éventuellement une feuille « anti solaire » (4) ou couche métallique fonctionnelle à propriétés de réflexion dans l'infrarouge et/ou dans le rayonnement solaire,
• au moins deux feuilles d'adhésif sensible à la pression (5), en contact direct avec une feuille fonctionnelle thermosensible (6) à base de cristaux liquides encapsulés, ou dispersés dans une matrice polymère (PDLC), de particules électrophorétiques dispersées dans un milieu, de particules dispersées dans un fluide électrophorétique ou comprenant un film de dispositif de particules en suspension (SPD) ou un stratifié d'un tel film, ou un système électrochrome;
• une deuxième feuille de verre (2);
ladite première feuille de verre (1) étant en contact direct avec ladite feuille intercalaire (3) ;
ladite seconde feuille de verre (2) étant en contact direct avec ladite feuille d'adhésif sensible à la pression (5) ;
ladite feuille d'adhésif sensible à la pression (5) et ladite deuxième feuille de verre (2) étant en contact direct au niveau de la face interne de cette deuxième feuille de verre (2), et le vitrage feuilleté comprenant successivement
• une première feuille d'adhésif sensible à la pression (5),
• une feuille fonctionnelle thermosensible (6),
• une seconde feuille d'adhésif sensible à la pression (5).

2. Vitrage feuilleté selon la revendication 1, dans lequel le polymère thermoplastique de la feuille intercalaire (3) est choisi parmi le polyvinylbutyral, le polyuréthane, l'éthylène acétate de vinyle et les ionomères.

3. Vitrage selon l'une des revendications précédentes, dans lequel le polymère thermoplastique de la feuille intercalaire (3) est le PVB.

4. Vitrage feuilleté selon l'une des revendications précédentes dans lequel l'adhésif sensible à la pression est choisi parmi les adhésifs sensibles à la pression à base d'acrylates et les adhésifs sensibles à la pression à base de silicone.

5. Vitrage feuilleté selon l'une des revendications précédentes dans lequel la feuille « anti solaire » est en argent ou tout autres métal ayant des propriétés de réflexion de la lumière ou un métal ou composé métallique ayant des propriétés d'absorption de la lumière.

6. Vitrage feuilleté selon l'une quelconque des revendications précédentes, **caractérisé en ce qu'**il est plat ou bombé.

7. Vitrage feuilleté selon l'une quelconque des revendications précédentes **caractérisé en ce qu'**il s'agit d'un vitrage de véhicule choisi parmi un pare-brise, un vitrage latéral avant, un vitrage latéral arrière, une lunette arrière et un vitrage de toit.

8. Vitrage feuilleté selon l'une quelconque des revendications précédentes **caractérisé en ce qu'**il s'agit d'un vitrage de véhicule choisi parmi une automobile, un train, un camion, un avion et un bus.

9. Procédé de fabrication d'un vitrage feuilleté selon l'une des revendications précédentes, dans lequel les étapes de mise en place des différentes feuilles ont lieu en partant (i) de la mise en place de la feuille intercalaire (3) en polymère thermoplastique sur la face interne de la première feuille de verre (1), en partant (ii) de la mise en place d'une feuille d'adhésif sensible à la pression (5) sur la face interne de la seconde feuille de verre (2) ou en partant (iii) de mise en place d'une feuille d'adhésif sensible à la pression (5) sur l'une au moins des deux faces d'une feuille fonctionnelle thermosensible (6).

10. Procédé de fabrication d'un vitrage feuilleté selon la revendication précédente, comprenant :
• au moins une étape de mise en place d'une feuille intercalaire (3) en polymère thermoplastique sur la face interne d'une première feuille de verre (1), éventuellement préalablement bombée, et éventuellement la mise en place d'une feuille « anti solaire » (4) sur la face restée vacante de ladite feuille intercalaire (3) qui est ainsi prise en sandwich entre ladite première feuille de verre (1) et ladite éventuelle feuille « anti solaire » (4) de manière à former un premier feuilleté partiel (7), et/ou
• au moins une étape de mise en place d'une première et/ou d'une seconde feuille d'adhésif sensible à la pression (5) sur l'une au moins des deux faces d'une feuille fonctionnelle thermosensible (6).

11. Procédé selon la revendication 9 ou 10 dans lequel la première feuille d'adhésif sensible à la pression (5) est disposée sur la première face de la feuille fonctionnelle thermosensible (6) et la seconde feuille d'adhésif sensible à la pression (5) est disposée sur la seconde face de ladite feuille fonctionnelle thermosensible (6), restée vacante, de manière à obtenir un second feuilleté partiel (8).

12. Procédé selon la revendication 11 dans lequel le second feuilleté partiel (8) est appliqué par l'intermédiaire de l'une de ses faces adhésives sensibles à la pression (5) sur ou sous le premier feuilleté partiel (7), soit directement sur la face vacante de la feuille de polymère thermoplastique de ce dernier, soit éventuellement sur la face vacante de la feuille « anti solaire » (4), lorsque celle-ci est présente, de ce premier feuilleté partiel (7) et la deuxième feuille de verre (2), éventuellement préalablement bombée, est appliquée au niveau de sa face interne sur ou sous la face du feuilleté résultant, opposée à la face restée vacante de la première feuille de verre (1).

13. Procédé selon la revendication 11 dans lequel la deuxième feuille de verre (2), éventuellement préalablement bombée, est appliquée au niveau de sa face intérieure sur ou sous l'une des faces dudit second feuilleté partiel (8), de manière à former un troisième feuilleté partiel (9).

14. Procédé selon la revendication 13, dans lequel ledit troisième feuilleté partiel (9) est mis en place par l'intermédiaire de sa face adhésive sensible à la pression (5) sur ou sous le premier feuilleté partiel (7), soit directement sur la face vacante de sa feuille de polymère thermoplastique (3) soit éventuellement sur la face vacante de sa feuille « anti solaire » (4), lorsque celle dernière est présente.

15. Procédé de fabrication d'un vitrage feuilleté selon l'une des revendications 9 à 14 comprenant en outre au moins :
• une étape de dégazage sous vide du feuilleté résultant, avec utilisation d'un joint périphérique ou d'un sac à vide,
• éventuellement une étape de scellage à chaud des bords dudit feuilleté, et
• une étape d'autoclavage.

16. Procédé de fabrication d'un vitrage feuilleté selon l'une des revendications 19 à 14 comprenant en outre au moins une étape de calandrage, éventuellement à chaud.

17. Utilisation d'un vitrage selon l'une des revendications 1 à 8 pour fabriquer un vitrage de véhicule choisi parmi un pare-brise, un vitrage latéral avant, un vitrage latéral arrière, une lunette arrière et un vitrage de toit et/ou pour fabriquer un vitrage de véhicule choisi parmi une automobile, un train, un camion, un aéronef et un bus.

## Patentansprüche

1. Verbundverglasung, umfassend:
• eine erste Glasfolie (1);
• mindestens eine Zwischenfolie (3) aus thermoplastischem Polymer;
• wahlweise eine Sonnenschutzfolie (4) oder funktionelle metallische Schicht mit Infrarot- und/oder Sonnenstrahlung reflektierenden Eigenschaften,
• mindestens zwei Haftklebefolien (5) in direktem Kontakt mit einer wärmeempfindlichen funktionellen Folie (6) auf Basis von Flüssigkristallen, die in einer Polymermatrix (PDLC) eingekapselt oder dispergiert sind, elektrophoretischen Partikeln, die in einem Medium dispergiert sind, Partikeln, die in einem elektrophoretischen Fluid dispergiert sind, oder umfassend einen SPD-Film (Suspended Particle Device) oder einen Verbund aus einem solchen Film oder einem elektrochromen System;
• eine zweite Glasfolie (2);
wobei die erste Glasfolie (1) in direktem Kontakt mit der Zwischenfolie (3) steht;
wobei die zweite Glasfolie (2) in direktem Kontakt mit der Haftklebefolie (5) steht;
wobei die Haftklebefolie (5) und die zweite Glasfolie (2) im Bereich der Innenfläche dieser zweiten Glasfolie (2) in direktem Kontakt stehen und die Verbundverglasung nacheinander aufweist
• eine erste Haftklebefolie (5),
• eine wärmeempfindliche funktionelle Folie (6),
• eine zweite Haftklebefolie (5).

2. Verbundverglasung nach Anspruch 1, wobei das thermoplastische Polymer der Zwischenfolie (3) ausgewählt ist aus Polyvinylbutyral, Polyurethan, Ethylenvinylacetat und lonomeren.

3. Verglasung nach einem der vorstehenden Ansprüche, wobei das thermoplastische Polymer der Zwischenfolie (3) PVB ist.

4. Verbundverglasung nach einem der vorstehenden Ansprüche, wobei der Haftkleber ausgewählt ist aus Haftklebern auf Basis von Acrylaten und Haftklebern auf Basis von Silikon.

5. Verbundverglasung nach einem der vorstehenden Ansprüche, wobei die Sonnenschutzfolie aus Silber oder jedem anderen Metall mit lichtreflektierenden Eigenschaften oder einem Metall oder einer metallischen Verbindung mit lichtabsorbierenden Eigenschaften besteht.

6. Verbundverglasung nach einem der vorstehenden Ansprüche, **dadurch gekennzeichnet, dass** sie flach oder gewölbt ist.

7. Verbundverglasung nach einem der vorstehenden Ansprüche, **dadurch gekennzeichnet, dass** es sich um eine Fahrzeugverglasung, ausgewählt aus einer Windschutzscheibe, einer vorderen Seitenverglasung, einer hinteren Seitenverglasung, einer Heckscheibe und einer Dachverglasung, handelt.

8. Verbundverglasung nach einem der vorstehenden Ansprüche, **dadurch gekennzeichnet, dass** es sich um eine Verglasung eines Fahrzeugs, ausgewählt aus einem Automobil, einem Zug, einem LKW, einem Flugzeug und einem Bus, handelt.

9. Verfahren zum Herstellen einer Verbundverglasung nach einem der vorstehenden Ansprüche, wobei die Schritte des Platzierens der verschiedenen Folien ausgehend (i) vom Platzieren der Zwischenfolie (3) aus thermoplastischem Polymer auf die Innenfläche der ersten Glasfolie (1), ausgehend (ii) vom Platzieren einer Haftklebefolie (5) auf die Innenfläche der zweiten Glasfolie (2) oder ausgehend (iii) vom Platzieren einer Haftklebefolie (5) auf mindestens eine der zwei Flächen einer wärmeempfindlichen funktionellen Folie (6) erfolgen.

10. Verfahren zum Herstellen einer Verbundverglasung nach dem vorstehenden Anspruch, umfassend:
• mindestens einen Schritt des Platzierens einer Zwischenfolie (3) aus thermoplastischem Polymer auf die Innenfläche einer wahlweise zuvor gewölbten ersten Glasfolie (1) und wahlweise des Platzierens einer Sonnenschutzfolie (4) auf die frei gebliebene Fläche der Zwischenfolie (3), die so auf eine Weise zwischen der ersten Glasfolie (1) und der möglichen Sonnenschutzfolie (4) beidseitig umgeben ist, um ein erstes Teillaminat (7) zu bilden, und/oder
• mindestens einen Schritt des Platzierens einer ersten und/oder einer zweiten Haftklebefolie (5) auf mindestens eine der zwei Flächen einer wärmeempfindlichen funktionellen Folie (6).

11. Verfahren nach Anspruch 9 oder 10, wobei die erste Haftklebefolie (5) auf der ersten Fläche der wärmeempfindlichen funktionellen Folie (6) angeordnet wird und die zweite Haftklebefolie (5) auf der frei gebliebenen zweiten Fläche der wärmeempfindlichen funktionellen Folie (6) auf eine Weise angeordnet wird, um ein zweites Teillaminat (8) zu erhalten.

12. Verfahren nach Anspruch 11, wobei das zweite Teillaminat (8) über eine seiner Haftklebeflächen (5) auf oder unter dem ersten Teillaminat (7) aufgebracht wird, entweder direkt auf die freie Fläche der thermoplastischen Polymerfolie des Letzteren oder wahlweise auf die freie Fläche der Sonnenschutzfolie (4), sofern vorhanden, dieses ersten Teillaminats (7), und wobei die wahlweise vorher gewölbte zweite Glasfolie (2) im Bereich ihrer Innenfläche auf oder unter der Fläche des resultierenden Laminats gegenüber der frei gebliebenen Fläche der ersten Glasfolie (1) aufgebracht wird.

13. Verfahren nach Anspruch 11, wobei die wahlweise zuvor gewölbte zweite Glasfolie (2) im Bereich ihrer Innenfläche auf oder unter einer der Flächen des zweiten Teillaminats (8) aufgebracht wird, um ein drittes Teillaminat (9) zu bilden.

14. Verfahren nach Anspruch 13, wobei das dritte Teillaminat (9) über seine Haftklebefläche (5) auf oder unter dem ersten Teillaminat (7) platziert wird, entweder direkt auf die freie Fläche seiner thermoplastischen Polymerfolie (3) oder wahlweise auf die freie Fläche seiner Sonnenschutzfolie (4), sofern Letztere vorhanden ist.

15. Verfahren zum Herstellen einer Verbundverglasung nach einem der Ansprüche 9 bis 14, ferner mindestens umfassend:
• einen Schritt der Vakuumentgasung des resultierenden Laminats unter Verwendung einer Umfangsdichtung oder eines Vakuumbeutels,
• wahlweise einen Schritt der Heißsiegelung der Kanten des Laminats und
• einen Autoklavierungsschritt.

16. Verfahren zum Herstellen einer Verbundverglasung nach einem der Ansprüche 9 bis 14, ferner umfassend mindestens einen Schritt des Kalandrierens, wahlweise des Heißkalandrierens.

17. Verwendung einer Verglasung nach einem der Ansprüche 1 bis 8 zum Herstellen einer Fahrzeugverglasung, ausgewählt aus einer Windschutzscheibe, einer vorderen Seitenverglasung, einer hinteren Seitenverglasung, einer Heckscheibe und einer Dachverglasung und/oder zum Herstellen einer Verglasung eines Fahrzeugs, ausgewählt aus einem Automobil, einem Zug, einem LKW, einem Luftfahrzeug und einem Bus.

## Claims

1. A laminated glazing comprising:
• a first glass sheet (1);
• at least one interlayer sheet (3) made of thermoplastic polymer;
• optionally a "solar-protection" sheet (4) or functional metal layer having reflective properties in the infrared region and/or in the solar radiation region,
• at least two sheets of pressure-sensitive adhesive (5), in direct contact with a heat-sensitive functional sheet (6) based on liquid crystals encapsulated, or dispersed in a polymer matrix (PDLC), electrophoretic particles dispersed in a medium, particles dispersed in an electrophoretic fluid or comprising a suspended particle device (SPD) film or a laminate of such a film, or an electrochrome system;
• a second glass sheet (2);
said first glass sheet (1) being in direct contact with said interlayer sheet (3);
said second glass sheet (2) being in direct contact with said sheet of pressure-sensitive adhesive (5);
said sheet of pressure-sensitive adhesive (5) and said second glass sheet (2) being in direct contact at the internal face of this second glass sheet (2) and the laminated glazing comprising successively
• a first sheet of pressure-sensitive adhesive (5),
• a heat-sensitive functional sheet (6),
• a second sheet of pressure-sensitive adhesive (5).

2. The laminated glazing according to claim 1, wherein the thermoplastic polymer of the interlayer sheet (3) is chosen from polyvinylbutyral, polyurethane, ethylene vinyl acetate and ionomers.

3. The glazing according to one of the preceding claims, wherein the thermoplastic polymer of the interlayer sheet (3) is PVB.

4. The laminated glazing according to one of the preceding claims, wherein the pressure-sensitive adhesive is chosen from pressure-sensitive adhesives based on acrylates and pressure-sensitive adhesives based on silicone.

5. The laminated glazing according to one of the preceding claims, wherein the "solar protection" sheet is made of silver or any other metal having light reflecting properties or a metal or metal compound having light absorbing properties.

6. The laminated glazing according to any one of the preceding claims, **characterized in that** it is flat or bent.

7. The laminated glazing according to any one of the preceding claims, **characterized in that** it is a vehicle glazing chosen from a windshield, a front side glazing, a rear side glazing, a rear window and a roof glazing.

8. The laminated glazing according to any one of the preceding claims, **characterized in that** it is a vehicle glazing chosen from a motor vehicle, a train, a truck, a plane and a bus.

9. A process for the manufacture of a laminated glazing according to one of the preceding claims, wherein the stages of installing the different sheets take place starting (i) from the installing of the interlayer sheet (3) made of thermoplastic polymer on the internal face of the first glass sheet (1), starting (ii) from the installing of the pressure-sensitive adhesive sheet (5) on the internal face of the second glass sheet (2), or starting (iii) from the installing of a sheet of pressure-sensitive adhesive (5) on at least one of the two faces of a heat-sensitive functional sheet (6).

10. A process for the manufacture of a laminated glazing according to the preceding claim, comprising:
• at least one stage of installing an interlayer sheet (3) made of thermoplastic polymer on the internal face of a first glass sheet (1), optionally bent beforehand, and optionally the installation of a "solar-protection" sheet (4) on the face which has remained vacant of said interlayer sheet (3), which is thus sandwiched between said first glass sheet (1) and said optional "solar-protection" sheet (4), so as to form a first partial laminate (7), and/or
• at least one stage of installing a first and/or a second sheet of pressure-sensitive adhesive (5) on at least one of the two faces of a heat-sensitive functional sheet (6).

11. The process according to claim 9 or 10, wherein the first sheet of pressure-sensitive adhesive (5) is positioned on the first face of the heat-sensitive functional sheet (6) and the second sheet of pressure-sensitive adhesive (5) is positioned on the second face of said heat-sensitive functional sheet (6), which has remained vacant, so as to obtain a second partial laminate (8).

12. The process according to claim 11, wherein the second partial laminate (8) is applied via one of its faces which are pressure-sensitive adhesives (5) on or under the first partial laminate (7), either directly on the vacant face of the sheet of thermoplastic polymer of the latter or optionally on the vacant face of the "solar-protection" sheet (4), when the latter is present, of this first partial laminate (7), and the second glass sheet (2), optionally bent beforehand, is applied at its internal face on or under the face of the resulting laminate, opposite the face which has remained vacant of the first glass sheet (1).

13. The process according to claim 11, wherein the second glass sheet (2), optionally bent beforehand, is applied at its internal face on or under one of the faces of said second partial laminate (8), so as to form a third partial laminate (9).

14. The process according to claim 13, wherein said third partial laminate (9) is installed via its face which is pressure-sensitive adhesive (5) on or under the first partial laminate (7), either directly on the vacant face of its sheet of thermoplastic polymer (3) or optionally on the vacant side of its "solar protection" sheet (4), when the latter is present.

15. The process for the manufacture of a laminated glazing according to one of claims 9 to 14, further comprising at least:
• a stage of degassing the resulting laminate under vacuum, with use of a peripheral seal or of a vacuum bag,
• optionally one stage of heat sealing of the edges of said laminate, and
• one autoclaving stage.

16. The process for the manufacture of a laminated glazing according to one of claims 9 to 14, further comprising at least one calendering stage, optionally one hot calendering stage.

17. The use of a glazing according to one of claims 1 to 8 to manufacture a vehicle glazing chosen from a windshield, a front side glazing, a rear side glazing, a rear window and a roof glazing and/or to manufacture a glazing for a vehicle chosen from a motor vehicle, a train, a truck, an aircraft and a bus.
